# EUROPÄISCHE PATENTSCHRIFT

(11) **EP 2 563 569 B1**
(45) Veröffentlichungstag und Bekanntmachung des Hinweises auf die Patenterteilung: **19.06.2019**
(21) Anmeldenummer: 11708416.0
(22) Anmeldetag: 15.03.2011
(51) Int. Cl.: B29C 69/02, B29C 47/16, B29B 11/10, B29C 47/06, B29C 47/32, B29C 47/34, B29C 47/88, B29C 51/00, B29C 47/14, B29C 47/08, B29C 47/12

(54) **VERFAHREN ZUR HERSTELLUNG VON HOHLKÖRPERN AUS THERMOPLASTISCHEM KUNSTSTOFF**
METHOD FOR THE PRODUCTION OF THERMOPLASTIC HOLLOW ARTICLES
PROCÉDÉ DE FABRICATION DE CORPS CREUX EN MATIÈRE THERMOPLASTIQUE

(30) Priorität: 27.04.2010 DE 102010018527
(43) Veröffentlichungstag der Anmeldung: 06.03.2013
(73) Patentinhaber: Kautex Textron GmbH & Co. KG, 53229 Bonn (DE)
(72) Erfinder: NEIZERT, Hans-Georg, 53639 Königswinter (DE)
(74) Vertreter: Richly & Ritschel Patentanwälte PartG mbB
(86) Internationale Anmeldenummer: PCT/EP2011/001265
(87) Internationale Veröffentlichungsnummer: WO 2011/134573

(56) Entgegenhaltungen:
- DE-A1-102007 025 296
- GB-A- 1 465 564
- US-A- 4 247 588
- US-A- 4 290 248
- US-A- 4 612 238
- US-A1- 2002 017 745
- US-A1- 2007 148 371
- US-B1- 6 174 477

## Beschreibung

Die Erfindung betrifft ein Verfahren zur Herstellung von Hohlkörpern aus thermoplastischem Kunststoff.

Die Erfindung betrifft ein Verfahren zur Herstellung von Kraftstoffbehältern aus thermoplastischem Kunststoff. Solche Behälter besitzen in der Regel einen mehrschichtigen Wandaufbau aus HDPE mit EVOH als Barriereschicht gegenüber kohlenwasserstoffhaltigen Fluiden.

Klassisches Herstellungsverfahren für solche Kraftstofftanks aus Polyethlyen ist das Extrusionsblasformen. Dabei wird ein schlauchförmiger Vorformling aus Kunststoff extrudiert und im schmelzeheißen Zustand innerhalb eines mehrteiligen Extrusionsblasformwerkzeugs unter Anwendung von Differenzdruck, beispielsweise durch Aufblasen mittels eines Blasdorns zu dem fertigen Behälter, umgeformt, wobei das schlauchförmige Extrudat während der Ausformung innerhalb des Werkzeugs an die Kontur des Blaswerkzeugs angelegt wird. In dem blasgeformten Tank werden nun über Öffnungen, die nachträglich in die Tankwand geschnitten werden, Benzinpumpe, Füllstandsanzeiger, Sensoren und ggf. Ventile eingesetzt. Die Öffnungen werden nach dem Einbau der Komponenten entweder wieder zugeschweißt oder im Falle von Serviceöffnungen mit abgedichteten Schraubdeckeln versehen. Der Prozess des nachträglichen Einbringens von Komponenten in den Kraftstoffbehälter ist kostenintensiv und führt zu potentiellen Leckagen für flüssige und/oder gasförmige Kohlenwasserstoffe.

Es sind deshalb verschiedenste Ansätze bekannt geworden, Komponenten in den Behälter bereits bei der Herstellung des Behälters mit einzubringen. So ist es beispielsweise bekannt, den schlauchförmigen Vorformling aus Kunststoff während oder nach der Extrusion der Länge nach aufzutrennen und zu bahnförmigen bzw. flächigen Halbzeugen/Vorformlingen auszubreiten. Ein solches Verfahren ist beispielsweise aus der EP 1 184 157 A1 bekannt. Das Verfahren umfasst die Herstellung eines schlauchförmigen Kunststoffvorformlings in einer Blasform- oder Co-Extrusionsblasformanlage, das Aufschneiden des extrudierten oder co-extrudierten Kunststoffvorformlings zu wenigstens einem flächigen Halbzeug, das Thermoformen der erhaltenen flächigen Halbzeuge zu Halbschalen sowie das Verschweißen der thermogeformten Halbschalen zu einem Hohlkörper. Das Verschweißen der thermogeformten Halbschalen erfolgt nach dem Verfahren gemäß EP 1 184 157 A1 aus der Tiefziehwärme.

Ein Vorteil dieses Herstellungsverfahrens liegt darin, dass vor dem Verschweißen der tiefgezogenen Halbzeuge ggf. Einbauten wie etwa beispielsweise Komponenten eines Kraftstoffsystems, problemlos auf der Innenseite der Halbschalen angebracht werden können. Ein weiterer Vorteil dieses Verfahrens ist darin zu sehen, dass durch die Herstellung der flächigen Halbzeuge über eine Blasformanlage eine gezielte und reproduzierbare Wanddickensteuerung für die Vorformlinge möglich ist. Die Möglichkeiten der Wanddickensteuerung bei der Extrusion von schlauchförmigen Vorformlingen sind allerdings nur insoweit gegeben, als dass eine gleichmäßige und reproduzierbare Wanddickenverteilung in den Tankhalbschalen gewährleistet ist. Eine solche Wanddickensteuerung wird bei Extrusionsblasformanlagen üblicherweise über die Verstellung des Düsenspalts während der Extrusion bewerkstelligt, wobei zwischen sogenannter axialer Wanddickensteuerung, d. h. in Längsrichtung des Extrudats und radialer Wanddickensteuerung, d. h. über den Umfang des Extrudats, unterschieden wird. Der aus dem Extrusionskopf ausgestoßene Massestrom wird über den Umfang des extrudierten Schlauchs verteilt, sodass sich zwangsläufig eine gewisse Abhängigkeit der Materialverteilung der beiden Halbschalen voneinander einstellt.

Bei einem weiteren im Stand der Technik bekannten Herstellungsverfahren, dem sogenannten Thermoformverfahren, werden zunächst zwei Halbschalen durch Tiefziehen entsprechendder Plattenhalbzeuge gefertigt und diese in einem zweiten Verfahrensschritt miteinander verschweißt. Ein grundlegender Nachteil dieses Verfahrens besteht allerdings u. a. in der nur bedingt kontrollierbaren Wanddickenverteilung in den Tankhalbschalen, beispielsweise über ein Temperaturprofil beim Aufheizen. Die Wanddickenverteilung und somit die Sperrschichtdickenverteilung lassen sich nur unzureichend kontrollieren, da die Plattenhalbzeuge eine gleichmäßige Wanddicke besitzen, sodass je nach Reckverhältnis beim Tiefziehen die Wanddicke bzw. die Sperrschichtdicke lokal stark ausgedünnt werden kann.

Ein sogenanntes Twin-Sheet-Thermoform-Verfahren ist beispielsweise aus der US 2002/0017745 A1 bekannt, wobei die Herstellung von Kraftstoffbehältern das Erzeugen flächiger Vorformlinge aus plastifiziertem Kunststoff mit einem spezifischen Wanddickenprofil umfasst.

Ein Verfahren sowie eine Vorrichtung zur Extrusion von bahn- oder bänderförmigen Vorformlingen aus thermoplastischem Kunststoff mit einem Extrusionskopf, dessen Schmelzeaustritt als quer zur Extrusionsrichtung verstellbarer, sich geradlinig erstreckende Düsenspalt ausgebildet ist, ist beispielsweise aus der DE 10 2007 025 296 A1 bekannt. Mit diesem Verfahren wird vorgeschlagen, den so hergestellten Vorformlingen ein spezifisches Wanddickenprofil im Sinne einer Topographie aufzugeben. Das Verfahren sieht die Weiterverarbeitung der so hergestellten Extrudate in der ersten Hitze unter Anwendung von Gasdruck und/oder Vakuum zu einem Kunststoffbehälter vor. Die US 4,612,238 beschreibt die Herstellung von mehrlagigen Polymerbahnen, die einem Stanz- und Umformprozess unterworden werden.

Weiterer Stand der Technik ist aus den Dokumenten US 4,290,248 A, US 6,174,477 B1, US 4,247,588 und US 2007/0148371 A1 bekannt.

Aus der GB 1 465 564 ist die Herstellung eines geformten Kunststoffartikels aus zwei oder mehr laminierten Bahnen bekannt, wobei das Verfahren das Extrudieren mehrerer Folien umfasst, die auf sogenannte Quenchtrommeln extrudiert werden, auf diesen während des Quenchen/Abkühlens ein Profil erhalten und zwischen den Quenchtrommeln gegeneinander laminiert werden. Das so hergestellte Laminat bildet im Bereich der Profilerhöhungen, die nur auf einer Bahn vorgesehen sind, einen Verbund, wohingegen die Bahnen im Bereich der Profilvertiefungen naturgemäß nicht aneinander liegen. Die Bahnen werden konfektioniert und innerhalb eines mehrteiligen Formwerkzeugs zu flachen Hohlkörpern aufgeweitet, wobei die Profilzwischenräume innerhalb des geschlossenen Werkzeugs mit einem Druckmittel beaufschlagt werden, wohingegen die Bahnen randseitig im Werkzeug zusammengehalten werden.

Das Verfahren eignet sich zur Herstellung flacher Hohlkörper mit inneren Versteifungsrippen, wie sie beispielsweise zur Verpackung und/oder zur Verkleidung von Gegenständen geeignet sind.

Der Erfindung liegt die Aufgabe zugrunde, ein Verfahren zur Herstellung von Hohlkörpern aus thermoplastischem Kunststoff bereitzustellen, insbesondere von Großbehältnissen wie Kraftstoffbehältern, welches noch mehr als die bisher bekannten Verfahren dem Problem der Wanddickenverteilung am fertigen Erzeugnis Rechnung trägt. Insbesondere soll es möglich sein, Vorformlinge bzw. Halbzeuge zu erhalten, deren Wandungen regelrechte "Topographien" aufweisen.

Dem liegt insbesondere die Überlegung zugrunde, dass eine günstige Materialverteilung am fertigen Erzeugnis auch einem sparsamen Materialeinsatz Rechnung trägt und somit eine besonders kostengünstige Fertigung ermöglicht. Darüber hinaus werden auch den Anforderungen an den Leichtbau Rechnung getragen.

Die Aufgabe wird gelöst mit den Merkmalen des Anspruchs 1, vorteilhafte Ausgestaltungen der Erfindung ergeben sich aus den Unteransprüchen.

Die Erfindung rückt grundsätzlich von dem Prinzip ab, die Herstellung des Hohlkörpers aus der ersten Hitze, d. h. aus der Schmelzewärme des extrudierten Vorformlings zu betreiben. Vielmehr werden in einem ersten Schritt vorkonfektionierte Halbzeuge hergestellt, die unter Wiedererwärmung und Umformung zu entsprechend ausgebildeten Halbzeugen zu einem Hohlkörper verschweißt werden.

Ein grundsätzlicher Vorzug des erfindungsgemäßen Verfahrens ist u. a. darin zu sehen, dass bei der Herstellung der fertigen Hohlkörper, beispielsweise bei der Herstellung von Kraftstoffbehältern, der Hersteller keine Extrusionseinrichtungen bereithalten muss. Insbesondere die für die Herstellung von Großgebinden erforderlichen Extrusionseinrichtungen beanspruchen wegen der Größe der herzustellenden Vorformlinge verhältnismäßig viel Aufstellplatz.

Nach dem Abkühlen der Vorformlinge zu formbeständigen Halbzeugen erfolgt vorzugsweise ein Trimmen/Vorkonfektionieren der Halbzeuge.

Ein besonderer Vorteil des Verfahrens ist darin zu sehen, dass bei Herstellung von Kraftstoffbehältern bzw. bei Herstellung von Tanks, die Tankkomponenten im Tank optimal platziert werden können, bevor die beiden Tankhälften miteinander verschweißt werden. Darüber hinaus hat das Verfahren insbesondere den Vorzug, dass die Halbzeuge mit einer vorgegebenen Wanddickenverteilung/ Topographie hergestellt werden können.

Vorzugsweise wird das Wanddickenprofil den Vorformlingen während und/oder nach der Extrusion aufgegeben.

Bei einer besonders bevorzugten Variante erfolgt die Extrusion der Vorformlinge mittels eines Extrusionswerkzeugs mit wenigstens einer Breitschlitzdüse. Insbesondere die Verwendung von Breitschlitzdüsen zum Extrudieren plattenförmiger oder bahnförmiger Vorformlinge hat den Vorzug, dass eine gezielte Wanddickensteuerung über die gesamte Breite des Vorformlings möglich ist.

Alternativ kann die Extrusion der Vorformlinge mittels eines herkömmlichen Extrusionskopfs einer herkömmlichen Extrusionslblasformanlage oder Co-Extrusionsblasformanlage erfolgen, wobei zunächst ein schlauchförmiger Vorformling extrudiert wird, der unmittelbar nach Austritt aus dem Extrusionskopf oder während des Austritts aus dem Extrusionskopfs an diametral gegenüberliegenden Stellen der Länge nach aufgetrennt wird. Der aufgetrennte Schlauch kann nur dann zu zwei bahnförmigen bzw. flächigen Vorformlingen ausgebreitet werden. Bei Herstellung der Vorformlinge zunächst als schlauchförmiges Extrudat kann den Vorformlingen ein Wanddickenprofil mittels der bekannten axialen und/oder radialen Wanddickensteuerung aufgegeben werden.

Grundsätzlich kann das Wanddickenprofil der Vorformlinge wenigstens teilweise durch Düsenspaltverstellung während der Extrusion erzeugt werden. Bei Verwendung von Extrusionseinrichtungen mit Breitschlitzdüsen bzw. mit sich geradlinig erstreckenden Düsenspalten kann beispielsweise der Düsenspalt wenigstens einseitig unmittelbar von einer Anzahl von unabhängig voneinander quer zur Extrusionsrichtung verstellbaren Segmenten begrenzt sein, die eine stufen- oder treppenförmige Verstellung der Weite und/oder Breite des Düsenspalts ermöglichen. Die Segmente können jeweils als Schieber ausgebildet sein, die über einzelne Stelleinrichtungen bzw. Aktuatoren quer zur Schmelzeflussrichtung verstellbar sind. Durch dynamische Verstellung der Segmente während der Extrusion wird dem Vorformling über die Länge und/oder Breite ein Wanddickenprofil aufgegeben werden.

Erfindungsgemäß wird dieses Wanddickenprofil durch Abkühlung der Vorformlinge "eingefroren", sodass plattenförmige Halbzeuge erhalten werden, die nach Wiederaufheizung beispielsweise durch Thermoformen und/oder Tiefziehen zu entsprechenden Halbschalen eines Kunststoffbehälters umgeformt werden. Eine Verschweißung der Halbschalen kann aus der Tiefziehwärme oder auch unter Zuhilfenahme von bekannten Heizelementen erfolgen, welche die Halbschalen im Bereich von umlaufenden Flanschen zwecks Verschweißung aufheizen.

Das vorherige Abkühlen und Einfrieren der Topographie der Vorformlinge kann aktiv unter Zuhilfenahme von Kühlmitteln aber auch passiv bei Umgebungstemperatur erfolgen. Vorzugsweise kann das Wanddickenprofil der Vorformlinge durch Umformen der noch schmelzeheißen Vorformlinge nach der Extrusion erzeugt werden. Wird den Vorformlingen nach der Extrusion ein Wanddickenprofil aufgegeben, kann beispielsweise die Abkühlung der Vorformlinge während der Umformung erfolgen.

Zweckmäßigerweise werden die Vorformlinge mehrschichtig co-extrudiert. Insbesondere bei der Herstellung von Kraftstoffbehältern als Hohlkörper ist eine Co-Extrusion von HDPE mit EVOH als in die HDPE-Schichten eingebettete Barriereschicht besonders vorteilhaft. Diese Sperrschicht oder Barriereschicht aus Ethyl-Vinyl-Alkohol (EVOH) dient als Diffusionsbarriere für flüssige oder gasförmige Kohlenwasserstoffe. Beispielsweise kann ein typischer mehrschichtiger Wandaufbau sechsschichtig sein, wobei die jeweils äußeren Schichten aus HDPE bestehen, die Barriereschicht in zwei Haftvermittlerschichten eingebettet ist und zwischen einer Haftvermittlerschicht und der äußeren HDPE-Schicht eine sogenannte Mahlgutschicht oder Rezyklatschicht eingebettet ist. Bei einem Kraftstoffbehälter kann die äußere Schicht der Wandung des Behälters aus mit Russ eingefärbtem HDPE ausgebildet sein. Von außen nach innen schließen sich daran eine Mahlgutschicht, eine Haftvermittlerschicht, eine EVOH-Schicht, eine Haftvermittlerschicht und eine HDPE-Schicht an. Die innere HDPE-Schicht, die vorstehend zuletzt genannt ist, besteht in der Regel aus nicht eingefärbten jungfräulichen Polyethylen. Die Mahlgutschicht umfasst Bestandteile aller zuvor erwähnten Schichten und besteht in der Regel aus rezykliertem Abfall-/ Butzenmaterial, das bei der Herstellung der Halbschalen anfällt. Hierzu eignet sich beispielsweise das anfallende Trimmmaterial bei der Vorkonfektionierung der Halbschalen.

Eine Wanddickenverteilung der Vorformlinge kann alternativ oder zusätzlich auch durch das Aufbringen zusätzlicher Schichten bei der Co-Extrusion mehrschichtiger Vorformlinge beeinflusst werden. Beispielsweise können bei der Extrusion mehrere zusätzliche Dickschichten in Form von zusätzlichen Schichten "aufgesattelt" werden.

Bei einer vorteilhaften Variante des Verfahrens gemäß der Erfindung ist vorgesehen, dass eine Umformung der Vorformlinge mittels Profilwalzen erfolgt. Dabei erfolgt zunächst beispielsweise die Extrusion von bahnförmigen oder lappenförmigen flächigen Vorformlingen mittels einer oder mehrerer Breitschlitzdüsen, wobei den Vorformlingen bereits ein Wanddickenprofil aufgegeben wird. Diese können beispielsweise mit einer Abzugseinrichtung unter dem Extrusionskopf umgelenkt und horizontal zwischen Profilwalzen transportiert sowie abgelängt werden. Beim Hindurchführen durch die einen Walzenspalt bildenden Profilwalzen wird den Vorformlingen zusätzlich zu der bereits bei der Extrusion erzeugten Topographie eine Topographie über die Profilwalzen aufgegeben. Ein Vorzug dieses zusätzlichen Verfahrensschritt ist darin zu sehen, dass eine exakt definierte Wanddicken- und Materialverteilung der Vorformlinge erzielt wird, wobei gleichzeitig bei der Umformung mittels Profilwalzen bereits eine Abkühlung der Vorformlinge erzeugt wird. Eine solche Abkühlung wird bereits erreicht werden, wenn die Profilwalzen nicht gekühlt sind, allerdings ist es auch im Rahmen der Erfindung, die Profilwalzen aktiv zu kühlen.

Alternativ zu einer Umformung bzw. Prägung/Profilierung der Vorformlinge kann erfindungsgemäß eine Umformung der Vorformlinge mittels wenigstens einer Prägepresse erfolgen.

Die Verwendung von Profilwalzen/Kalander und/oder Prägepressen ermöglicht es, ein sogenanntes Wanddickenmuster entweder nur auf der Oberseite oder der Unterseite oder auf beiden Seiten der Vorformlinge/Platten zu erzielen. Auch bei der Verwendung von Prägestempeln bzw. Prägepressen können Teile der formgebenden Werkzeuge aktiv gekühlt sein.

Die Kühlung kann beispielsweise nach oder während der Umformung auch durch einen gekühlten Luftstrom, Eintauchen in Wasserbad oder Transportieren auf einem gekühlten Metallblech-Transportband bewerkstelligt werden.

Bei einer besonders vorteilhaften Variante des Verfahrens ist vorgesehen, dass den fertigen Halbzeugen bei der Erwärmung vor deren Umformung zu Halbschalen ein Temperaturprofil aufgegeben wird. Dies kann beispielsweise derart erfolgen, dass an Dickstellen des Halbzeuges eine intensivere Aufheizung vorgenommen wird, um eine gleichmäßige Reckung des beispielsweise in einem Tiefziehwerkzeug umgeformten Halbzeuges zu erzielen. Insbesondere an Stellen mit erhöhter Wanddicke können zur Unterstützung der Verformung mechanische Streckhilfen die erforderliche Kräfte für die gewünschte Verformung bereitstellen. Als mechanische Streckhilfen kommen beispielsweise Stempel oder Schieber in Betracht.

Bei einer weiteren vorteilhaften Variante des Verfahrens gemäß der Erfindung ist vorgesehen, dass die Halbzeuge mehrstufig aufgeheizt werden, wobei in einer ersten Stufe eine Aufheizung und ggf. ein Halten bei einer ersten kleineren Temperatur und in einer zweiten Stufe ein Aufheizen auf eine größere Temperatur erfolgt.

Insbesondere bei Verwendung mehrlagiger bzw. mehrschichtiger Halbzeuge mit eingebetteten Barriereschichten kann eine Aufheizung im Sinne einer Vorkonditionierung oder einer Vortemperierung vorteilhaft sein, um über die gesamte Dicke des Halbzeuges an jeder Stelle eine möglichst gleichmäßige Temperatur zu erzielen, sodass auch eine gleichmäßige Reckung aller Schichten des Halbzeuges, insbesondere auch der EVOH-Schicht bei dessen Umformung zu einer Halbschale gewährleistet ist.

Wie vorstehend bereits erwähnt, kann das Abkühlen der Vorformlinge mittels wenigstens einer der Extrusion nachgeschalteten Kühleinrichtung erfolgen. In Betracht kommen Klimakammern, gekühlte Transporteinrichtungen, gekühlte Abzugseinrichtungen etc.

Bei einer bevorzugten Variante des Verfahrens gemäß der Erfindung ist vorgesehen, dass die Vorformlinge in Schwerkraftrichtung extrudiert werden und mittels wenigstens einer Abzugseinrichtung horizontal transportiert werden.

Nach dem offenbarten Verfahren werden zunächst Halbzeuge für verschiedenste Hohlkörper bzw. Kraftstoffbehälter hergestellt, wobei die Halbzeuge für Behälteroberseite und Behälterunterseite unterschiedlich sind. Es ist deswegen vorgesehen, an den Halbzeugen Identifikationsmittel vorzusehen, die bei Verwendung in Thermoformmaschinen bzw. Thermoformwerkzeugen eine eindeutige Zuordnung der Halbzeuge ermöglichen. Als Identifikationsmittel kommen beispielsweise Etiketten, Formmarken, RFID-Tags (Radio Frequency Identification Tags) oder dergleichen in Betracht. Als Formmarken können beispielsweise auch mechanische abtastbare Kerbcodierungen an den Kanten der Halbzeuge vorgesehen sein.

Um eine gezielte Aufheizung von Dickstellen der Halbzeuge vor deren Umformung zu Halbschalen zu ermöglichen, ist eine genaue Ausrichtung der Halbzeuge zu der Kavität sowohl als auch zu der Erwärmungsvorrichtung eines Tiefzieh- bzw. Umformwerkzeuges vorteilhaft. Hierzu können an den Halbzeugen zusätzlich Ausrichtmittel bzw. Ausrichthilfen vorgesehen werden, dies können beispielsweise sein optisch erfassbare Marken, Farbmarkierungen, optische Muster. Auch eine Erkennung der Topographie des "Wanddickengebirges" der einzelnen Halbzeuge kann vorgesehen sein. Schließlich sind hierzu ebenfalls mechanisch erfassbare Marken in Form von Formmarken, Löchern, Kerben oder Erhebungen oder dergleichen vorteilhaft.

Das Verfahren gemäß der Erfindung wird nachstehend anhand eines Ausführungsbeispiels erläutert werden.

Es zeigen:
- Figur 1: eine schematische Ansicht einer Extrusionsvorrichtung zur Erzeugung von Vorformlingen zur Verwendung in dem erfindungsgemäßen Verfahren,
- Figuren 2 und 3: Querschnitte durch eine bei dem Verfahren gemäß der Erfindung verwendete Breitschlitzdüse mit verstellbarem Düsenspalt, wobei die Ansicht grob schematisch ist,
- Figur 4: eine den Figuren 2 und 3 entsprechende Ansicht einer zweiten Variante einer Breitschlitzdüse,
- Figur 5: eine stark übertriebene Darstellung eines aus der Breitschlitzdüse austretenden Vorformlings,
- Figuren 6a bis 7: mögliche Querschnittsprofile eines Vorformlings,
- Figur 8: eine schematische Darstellung einer ersten Variante des Herstellungsverfahrens gemäß der Erfindung, wobei die Verfahrensschritte Wiederaufheizen, Thermoformen und Verschweißen der Halbschalen nicht dargestellt sind,
- Figur 9: eine zweite Variante des Herstellungsverfahrens gemäß der Erfindung grob schematisch,
- Figur 10: eine dritte Variante des Herstellungsverfahrens gemäß der Erfindung.

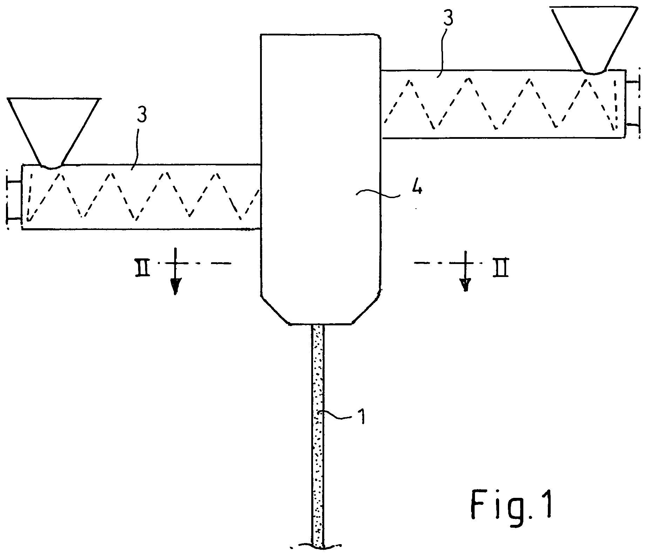

In den Figuren ist schematisch das erfindungsgemäße Herstellungsverfahren in mehreren Varianten dargestellt. In Figur 1 ist nur andeutungsweise und stark vereinfacht ein Extrusionskopf 4 einer Extrusionsanlage mit zwei Schneckenextrudern 3 dargestellt, die zur Plastifizierung und Förderung eines Kunststoffgranulats in bekannter Art und Weise ausgebildet sind. Die Schneckenextruder sind radial an den Extrusionskopf 4 angeschlossen, innerhalb dessen das plastifizierte thermoplastische Material über Schmelzekanäle einer Extrusionsdüse 2 zugeführt wird, die im vorliegenden Fall als sogenannte Breitschlitzdüse ausgebildet ist. Die Anzahl der an den Extrusionskopf 1 angeschlossenen Schneckenextruder 3 ist für die Erfindung nicht kritisch und hängt von der Anzahl der zu extrudierenden Schichten des mit 1 bezeichneten bahn- oder lappenförmigen Vorformlings ab.

Die Herstellung des Artikels bzw. Hohlkörpers, im vorliegenden Fall eines Kraftstoffbehälters aus thermoplastischem Kunststoff, umfasst zunächst die Herstellung bahnförmiger flächiger bzw. lappenförmiger Vorformlinge 1 durch Extrusion entweder als einschichtiges oder als mehrschichtiges Extrudat mit einer definierten "Topographie", das Konfektionieren und Abkühlen der Vorformlinge 1 zu plattenförmigen Halbzeugen 11 sowie die Weiterverarbeitung der Halbzeuge 11 zu einem fertigen Hohlkörper bzw. Kraftstoffbehälter. In den Zeichnungen ist diese Weiterverarbeitung der Halbzeuge nicht dargestellt. Die Halbzeuge 11 werden hierzu in einer bekannten Vorrichtung zum Thermoformen/Tiefziehen wieder erwärmt und zu Halbschalen umgeformt, welche ggf. mit Einbauteilen bestückt an flanschartig ausgebildeten Rändern zu einem fertigen Hohlkörper verschweißt werden. Die in den Behälter einzubringenden Einbauteile können in einfacher Art und Weise an den innenseitig freiliegenden Halbschalen verschweißt und/oder vernietet werden. Das Verschweißen der Halbschalen zum fertigen Hohlkörper sowie auch das Verschweißen und Vernieten von Einbauteilen kann aus der Tiefziehwärme erfolgen, hierzu kann allerdings auch zusätzliche Heizenergie mittels Infrarotheizeinrichtungen in die Halbzeuge eingebracht werden.

Eine gezielte Wanddickenverteilung bzw. Topographie kann bei dem Verfahren gemäß der Erfindung zunächst ausschließlich bei der Herstellung des Vorformlings erzeugt werden. Diese Wanddickenverteilung kann sodann beim Abkühlen der Vorformlinge 1 eingefroren werden. Wie dies allerdings nachstehend noch im Einzelnen beschrieben wird, kann bei dem Verfahren zusätzlich vor oder während der Abkühlung der Vorformlinge 1 durch weitere mechanische Einwirkung, vorzugsweise durch Prägung und/oder Pressen eine exakt definierte "kalibrierte" Wanddickenverteilung aufgegeben werden.

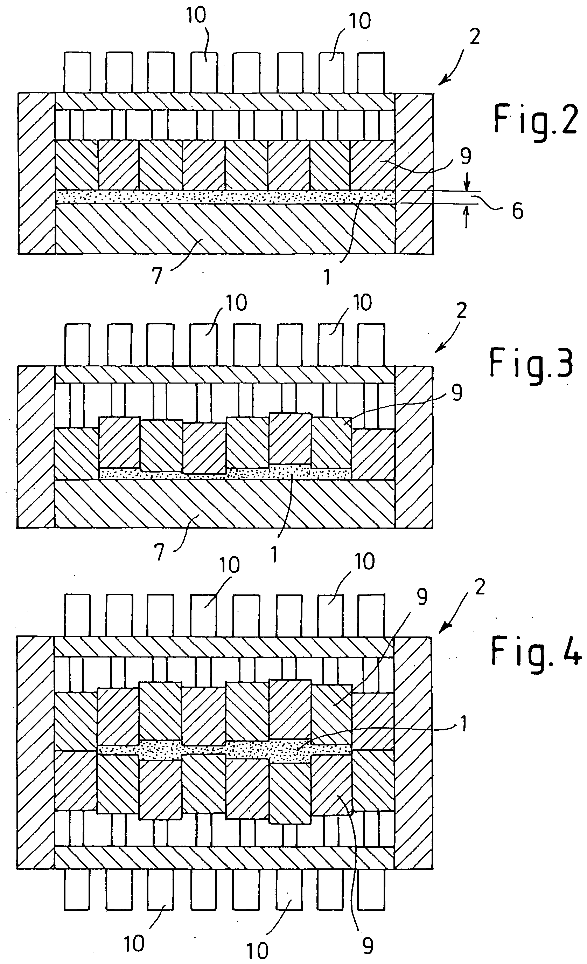

Zunächst erfolgt eine Wanddickensteuerung in der Extrusionsdüse 2, wie dies anhand der Figuren 2 bis 7 erläutert werden wird. Obwohl der Vorformling 1 auch durch Extrudieren eines an diametral gegenüberliegenden Stellen aufzuschneidenden Schlauchs mit gezielter Wanddickenverteilung (WDS und PWDS) herstellbar ist, wird bei dem beschriebenen Verfahren die Extrusion mittels einer Breitschlitzdüse bevorzugt.

Hierzu ist zunächst vorgesehen, dass der Düsenspalt 6 der Extrusionsdüse 2 sowohl in seiner Weite als auch in seiner Breite verstellbar ist. Wie insbesondere den Schnittansichten in Figuren 2 bis 4 zu entnehmen ist, ist der Düsenspalt 6 als im Querschnitt rechteckförmiger Schlitz ausgebildet, dessen Breite ein vielfaches seiner Weite beträgt.

In dem in den Figuren 2 und 3 dargestellten Ausführungsbeispiel wird der Düsenspalt 6 einerseits von einem starren Wandabschnitt 7 des Düsenkörpers 8 und andererseits von mehreren Segmenten in Form von Schiebern 9 begrenzt. Der Wandabschnitt 7 und die Schieber 9 begrenzen jeweils die Längsseiten des Düsenspalts 6. Die Schieber 9 sind jeweils über Stelleinrichtungen 10 quer zur Extrusionsrichtung verstellbar, und zwar unabhängig voneinander, sodass dem betreffenden Vorformling ein etwa treppenförmiges oder stufenförmiges Profil aufgegeben werden kann.

Obwohl der Querschnitt des Düsenspalts somit stufig ist, hat sich überraschenderweise herausgestellt, dass das plastifizierte Material ein solches Fließverhalten hat, dass diese Stufen oder diskontinuierliche Wanddickenveränderungen an dem Vorformling als scharfe Übergänge nicht wiederzufinden sind.

Wie vorstehend bereits erwähnt, wird die Stellung der Schieber 9 über Stelleinrichtungen während der Extrusion, d. h. dynamisch, beeinflusst, sodass den Vorformlingen 1 ein sich über die Länge der Vorformlinge veränderndes Profil (Dickensteuerung) über die Breite aufgegeben werden kann.

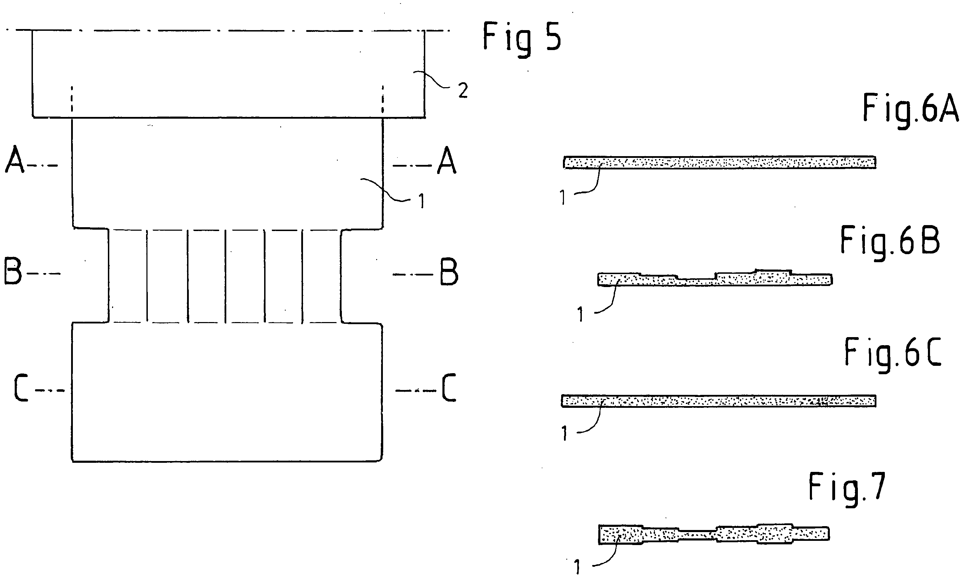

Die Schieber 9 sind beispielsweise in der Figur 2 in der vollständig geöffneten Neutralstellung dargestellt, wohingegen beispielsweise in Figur 3 die die äußeren Schmalseiten des Düsenspalts 6 begrenzenden Schieber sich in ihrer vollständig geschlossenen Endlage befinden. Auf diese Art und Weise lässt sich die Breite des Düsenspalts 6 ebenso beeinflussen, sodass sich, wie dies beispielsweise in Figur 5 übertrieben dargestellt ist, Vorformlinge 1 erzeugen lassen, die tailliert sind, bzw. eingezogene Abschnitte (B) aufweisen.

Der in Figur 5 gezeigte Vorformling 1 besitzt der Länge nach drei aufeinander folgende Abschnitte A, B, C, wohingegen der Abschnitt B bezüglich der Abschnitte A, C eine geringere Breite aufweist bzw. eingezogen ist. Die hier beschriebene Extrusionsdüse besitzt keine überlagerte oder separate Grundspaltverstellung, die über die Gesamtbreite des Düsenspalts 6 wirkt. Eine solche überlagerte Grundspaltverstellung kann allerdings ebenso vorgesehen sein. Die Schieber 9 sind alle unabhängig voneinander betätigbar.

In Figur 4 ist eine Variante der Extrusionsdüse dargestellt, bei der die Schieber beide Längsseiten des Düsenspalts unmittelbar begrenzen, sodass dem Vorformling ein Wanddickenprofil derart aufgebbar ist, dass dieser zwei profilierte Außenseiten aufweist, die beispielsweise in der Schnittansicht in Figur 7 dargestellt sind. Auf diese Art und Weise lässt sich besonders vorteilhaft ein Vorformling erstellen, der auf beiden seiner großen Außenflächen eine über Länge und Breite variierende komplexe Topographie aufweist. Darüber hinaus ist dieser, wie dies in Figur 4 dargestellt ist, auch die Breite des Düsenspalts einstellbar. Die Schieber 9 können abschnittsweise von außen nach innen gegeneinander gefahren werden, sodass auch in der Vorrichtung gemäß Figur 4 ein Vorformling herstellbar ist, wie er in Figur 5 dargestellt ist.

Wie vorstehend bereits erwähnt, hat die so erzeugte Topographie keine scharfen Übergänge, welche auch nicht immer wünschenswert sind.

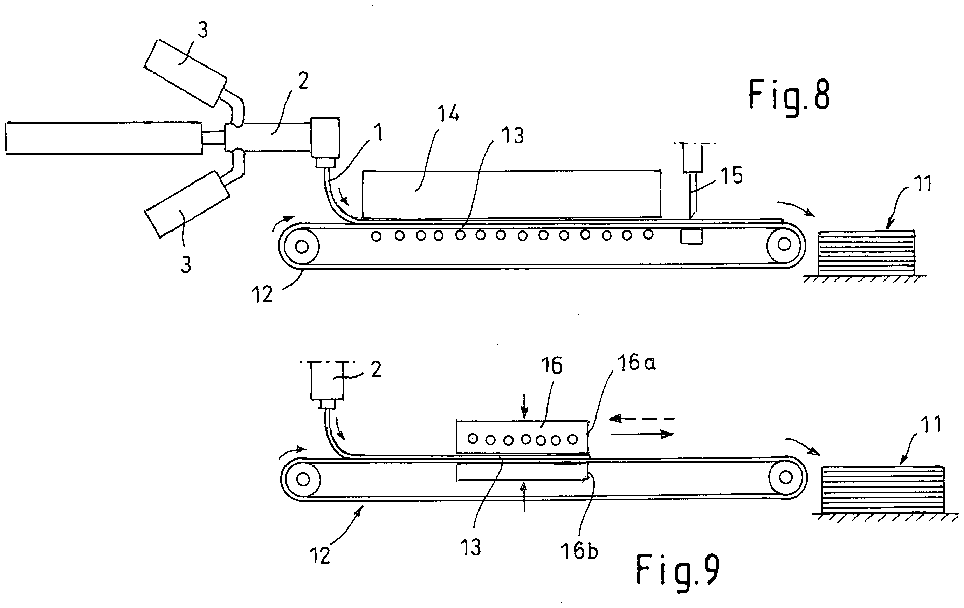

Durch die Herstellung der Vorformlinge 1 in der vorstehend beschriebenen Art und Weise wird hauptsächlich eine Materialverteilung erreicht, die in dieser Form eingefroren werden kann, wie dies beispielsweise in Figur 8 dargestellt ist. Dort ist unterhalb des Extrusionkopfs 4 eine Abzugseinrichtung in Form eines Transportbandes 12 angeordnet, mit welchem die Vorformlinge 1, die zunächst hängend, d. h. in Schwerkraftrichtung extrudiert werden, horizontal in Förderrichtung des Transportbandes 12 von dem Extrusionskopf 4 abgezogen werden. Das Transportband 12 ist beispielsweise als Metallplatten-Transportband ausgebildet und mit einem zwischen den Trummen des Transportbandes 12 angeordneten Wärmetauscher 13 gekühlt. Das Obertrum bzw. Lastrum des Transportbandes 12 durchläuft eine Kühlbox 14, die mit gekühlter Luft oder einem Kühlgas gespült wird. Nach Austritt aus der Kühlbox 14 werden die Vorformlinge 1 mittels einer Schneideinrichtung 15 vereinzelt. Die von der Schneideinrichtung 15 zu trennenden Stellen können vorher bei der Extrusion durch gezielte Düsenspaltverstellung bereits als Dünnstellen ausgebildet worden sein. Die Schneideinrichtung 15 kann beispielsweise ein Heißmesser oder Heißdrähte oder dergleichen umfassen.

In Figur 9 ist eine weitere Variante des Verfahrens gemäß der Erfindung dargestellt. Dort wird ebenfalls der Vorformling 1 mittels eines Transportbandes 12 vom Extrusionskopf 9 abgezogen, wobei dieser allerdings dann einer Prägepresse 16 zugeführt wird. In der Prägepresse 16, welche einen Oberstempel 16a und einen Unterstempel 16b umfasst, wird dem Vorformling 1 eine definierte und kalibrierte Topographie aufgegeben. Dies kann ohne nennenswerte Wanddickensteuerung bei der Extrusion aber auch zusätzlich zu einer Wanddickensteuerung und Wanddickenverteilung bei einer Extrusion erfolgen. Dabei kann dem Vorformling einseitig aber auch beidseitig eine Prägung aufgegeben werden. Der Oberstempel 16a ist bei dem beschriebenen Ausführungsbeispiel mit einem Wärmetauscher 13 versehen, sodass Kühlung und Prägung hier in einem Verfahrensschritt vonstatten gehen. Selbstverständlich kann Kühlung und Prägung voneinander entkoppelt sein.

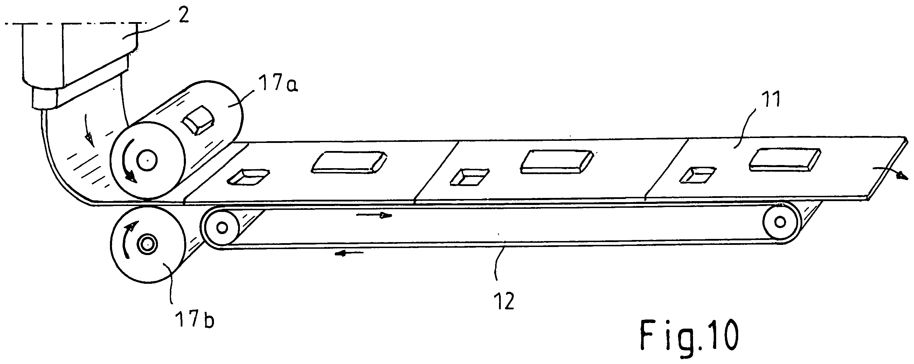

Ein weiteres Ausführungsbeispiel gemäß der Erfindung ist in Figur 10 dargestellt. Dort ist eine Prägeeinrichtung in Form zweier einen Walzenspalt begrenzender Profilwalzen 17a, 17b vorgesehen, durch welchen der Vorformling 1 hindurchgeführt wird. Bei dem beschriebenen Ausführungsbeispiel sind beide Walzen als Profilwalzen 17a, 17b ausgebildet, es ist für den Fachmann ersichtlich, dass auch nur eine der Walzen als Profilwalze ausgebildet sein kann. Nach Verlassen des Walzenspaltes wird der umgeformte Vorformling 1 über ein Transportband 12 abgezogen, anschließend verfolgt die Kühlung und Vereinzelung der Vorformlinge 1 zu lagerbaren Halbzeugen 11.

Vor der Einlagerung der Halbzeuge 11 kann eine Konfektionierung im Sinne von Beschneiden/Trimmen der Halbzeuge vorgesehen sein.

Die vorkonfektionierten Halbzeuge werden anschließend wieder aufgeheizt, plastifiziert und umgeformt/ausgeformt. Sodann werden diese zu fertigen Kraftstoffbehältern verschweißt, wobei zwischen dem Ausformen/Umformen ggf. Einbauteile an den einander zuzuwendenden Innenseiten der Halbzeuge angebracht werden.

### Bezugszeichenliste

- 1: Vorformling
- 2: Extrusionsdüse
- 3: Schneckenextruder
- 4: Extrusionskopf
- 6: Düsenspalt
- 7: Wandabschnitt
- 8: Düsenkörper
- 9: Schieber
- 10: Stelleinrichtungen
- 11: Halbzeuge
- 12: Transportband
- 13: Wärmetauscher
- 14: Kühlbox
- 15: Schneideinrichtung
- 16: Prägepresse
- 16a: Oberstempel
- 16b: Unterstempel
- 17a, b: Profilwalzen

## Patentansprüche

1. Verfahren zur Herstellung von Kraftstoffbehältern aus thermoplastischem Kunststoff, folgende Verfahrensschritte umfassend:
- Erzeugen flächiger Vorformlinge (1) aus plastifiziertem Kunststoff,
- wobei den Vorformlingen jeweils ein spezifisches Wanddickenprofil aufgegeben wird,
- Abkühlen der Vorformlinge zu formbeständigen plattenförmigen Halbzeugen (11) unter Beibehaltung des Wanddickenprofils, wobei das Wanddickenprofil durch Abkühlen der Vorformlinge eingefroren wird,
- Erwärmen der plattenförmigen Halbzeuge und Ausformen der erwärmten Halbzeuge zu Halbschalen und
- anschließendes Verschweißen der Halbzeuge zu einem im Wesentlichen geschlossenen Kraftstoffbehälter.

2. Verfahren nach Anspruch 1, **dadurch gekennzeichnet, dass** die Vorformlinge durch Extrusion plastifiziertem Kunststoffs hergestellt werden.

3. Verfahren nach einem der Ansprüche 1 oder 2, **dadurch gekennzeichnet, dass** das Wanddickenprofil den Vorformlingen während und/oder nach der Extrusion aufgegeben wird.

4. Verfahren nach einem der Ansprüche 1 bis 3, **dadurch gekennzeichnet, dass** die Extrusion der Vorformlinge mittels wenigstens eines Extrusionswerkzeuges mit wenigstens einer Breitschlitzdüse (2) erfolgt.

5. Verfahren nach einem der Ansprüche 1 bis 4, **dadurch gekennzeichnet, dass** das Wanddickenprofil der Vorformlinge wenigstens teilweise durch Düsenspaltverstellung während der Extrusion erzeugt wird.

6. Verfahren nach einem der Ansprüche 1 bis 5, **dadurch gekennzeichnet, dass** das Wanddickenprofil der Vorformlinge wenigstens teilweise durch Umformen der noch schmelzeheißen Vorformlinge nach der Extrusion erzeugt wird.

7. Verfahren nach Anspruch 6, **dadurch gekennzeichnet, dass** die Abkühlung der Vorformlinge während der Umformung erfolgt.

8. Verfahren nach einem der Ansprüche 1 bis 7, **dadurch gekennzeichnet, dass** die Vorformlinge mehrschichtig co-extrudiert werden.

9. Verfahren nach einem der Ansprüche 1 bis 8, **dadurch gekennzeichnet, dass** die Wanddickenverteilung der Vorformlinge durch Aufbringen zusätzlicher Schichten bei der Extrusion beeinflusst wird.

10. Verfahren nach einem der Ansprüche 6 bis 9, **dadurch gekennzeichnet, dass** eine Umformung der Vorformlinge mittels wenigstens einer Profilwalze (17a, 17b) erfolgt.

11. Verfahren nach einem der Ansprüche 6 bis 9, **dadurch gekennzeichnet, dass** eine Umformung der Vorformlinge mittels wenigstens einer Prägepresse (16) erfolgt.

12. Verfahren nach einem der Ansprüche 1 bis 11, **dadurch gekennzeichnet, dass** den Halbzeugen bei der Erwärmung ein Temperaturprofil aufgegeben wird.

13. Verfahren nach einem der Ansprüche 1 bis 11, **dadurch gekennzeichnet, dass** die Halbzeuge mehrstufig aufgeheizt werden, wobei in einer ersten Stufe ein Aufheizen und ggf. Halten bei einer ersten kleineren Temperatur und in einer zweiten Stufe ein Aufheizen auf eine zweite größere Temperatur erfolgt.

14. Verfahren nach einem der Ansprüche 1 bis 13, **dadurch gekennzeichnet, dass** das Abkühlen der Vorformlinge mittels wenigstens einer der Extrusion nachgeschalteten Kühleinrichtung erfolgt.

15. Verfahren nach einem der Ansprüche 1 bis 14, **dadurch gekennzeichnet, dass** die Vorformlinge in Schwerkraftrichtung extrudiert werden und mittels wenigstens einer Abzugseinrichtung horizontal transportiert werden.

## Claims

1. Method for producing fuel tanks from thermoplastic plastic, comprising the following process steps:
- production of sheet-like preforms (1) of plasticized plastic,
- wherein a specific wall-thickness profile is imposed on each of the preforms,
- cooling of the preforms to form dimensionally stable plate-shaped semi-finished products (11) while retaining the wall thickness profile, wherein the wall thickness profile is frozen in by cooling of the preforms,
- heating the plate-shaped semi-finished products and forming the heated semi-finished products into half-shells and
- subsequent welding of the semi-finished products to form a substantially closed fuel tank.

2. Method according to claim 1, **characterized in that** the preforms are produced by extrusion of plasticized plastic.

3. Method according to any one of claims 1 or 2, **characterized in that** the wall thickness profile is provided to the preforms during and/or after extrusion.

4. Method according to any one of the claims 1 to 3, **characterized in that** the extrusion of the preforms is carried out by means of at least one extrusion die with at least one slot die (2).

5. Method according to any one of claims 1 to 4, **characterized in that** the wall thickness profile of the preforms is at least partially produced by an adjustment of the die gap during extrusion.

6. Method according to any one of claims 1 to 5, **characterized in that** the wall-thickness profile of the preforms is at least to some extend produced by reshaping the still melt-hot preforms after extrusion.

7. Method according to claim 6, **characterized in that** the cooling of the preforms takes place during reshaping.

8. Method according to any one of claims 1-7, **characterized in that** the preforms are coextruded in a plurality of layers.

9. Method according to any one of claims 1-8, **characterized in that** the wall thickness distribution of the preforms is influenced by the application of additional layers during extrusion.

10. Method according to any one of claims 6-9, **characterized in that** the preforms are reshaped by means of at least one profile roll (17a, 17b).

11. Method according to any one of claims 6-9, **characterized in that** the preforms are reshaped by means of at least one embossing press (16).

12. Method according to any one of claims 1-11, **characterized in that** during heating process a temperature profile is imposed for the semi-finished products.

13. Method according to any one of the claims 1-11, **characterized in that** the semi-finished products are heated in a plurality of stages, wherein heating and optionally holding at a first lower temperature in a first stage takes place and heating to a second higher temperature takes place in a second stage.

14. Method according to any one of claims 1-13, **characterized in that** the cooling of the preforms is performed by means of at least one cooling device downstream of the extrusion.

15. Method according to any of claims 1-14, **characterized in that** the preforms are extruded in the direction of gravity and are transported horizontally by means of at least one take-off device.

## Revendications

1. Procédé de fabrication de réservoirs de carburant à partir de matière synthétique thermoplastique, comprenant les étapes de procédé suivantes :
- production de préformes planes (1) à partir de matière synthétique plastifiée,
- un profil d'épaisseur de paroi spécifique étant conféré respectivement aux préformes,
- refroidissement des préformes pour former des produits semi-finis (11) en forme de plaques à stabilité de forme en maintenant le profil d'épaisseur de paroi, le profil d'épaisseur de paroi étant figé par refroidissement des préformes,
- réchauffement des produits semi-finis en forme de plaques et façonnage des produits semi-finis réchauffés pour former des demi-coques et
- soudage subséquent des produits semi-finis pour former un réservoir de carburant sensiblement fermé.

2. Procédé selon la revendication 1, **caractérisé en ce que** les préformes sont fabriquées par extrusion de matière synthétique plastifiée.

3. Procédé selon la revendication 1 ou 2, **caractérisé en ce que** le profil d'épaisseur de paroi est conféré aux préformes pendant et/ou après l'extrusion.

4. Procédé selon l'une des revendications 1 à 3, **caractérisé en ce que** l'extrusion des préformes s'effectue au moyen d'au moins un outil d'extrusion doté d'au moins une filière à fente large (2).

5. Procédé selon l'une des revendications 1 à 4, **caractérisé en ce que** le profil d'épaisseur de paroi des préformes est produit au moins partiellement par ajustage de l'embouchure de la filière pendant l'extrusion.

6. Procédé selon l'une des revendications 1 à 5, **caractérisé en ce que** le profil d'épaisseur de paroi des préformes est produit au moins partiellement par formage des préformes encore fondues après l'extrusion.

7. Procédé selon la revendication 6, **caractérisé en ce que** le refroidissement des préformes s'effectue pendant le formage.

8. Procédé selon l'une des revendications 1 à 7, **caractérisé en ce que** les préformes sont co-extrudées en plusieurs couches.

9. Procédé selon l'une des revendications 1 à 8, **caractérisé en ce que** la distribution d'épaisseur de paroi des préformes est influencée par l'application de couches supplémentaires lors de l'extrusion.

10. Procédé selon l'une des revendications 6 à 9, **caractérisé en ce qu'**un formage des préformes s'effectue au moyen d'au moins un cylindre à profiler (17a, 17b).

11. Procédé selon l'une des revendications 6 à 9, **caractérisé en ce qu'**un formage des préformes s'effectue au moyen d'au moins une presse à estamper (16) .

12. Procédé selon l'une des revendications 1 à 11, **caractérisé en ce qu'**un profil de température est conféré aux produits semi-finis lors du réchauffement.

13. Procédé selon l'une des revendications 1 à 11, **caractérisé en ce que** les produits semi-finis sont chauffés en plusieurs étapes, un chauffage et éventuellement un maintien à une première température plus faible s'effectuant lors d'une première étape, et un chauffage à une deuxième température plus élevée s'effectuant lors d'une deuxième étape.

14. Procédé selon l'une des revendications 1 à 13, **caractérisé en ce que** le refroidissement des préformes s'effectue au moyen d'au moins un dispositif de refroidissement placé en aval de l'extrusion.

15. Procédé selon l'une des revendications 1 à 14, **caractérisé en ce que** les préformes sont extrudées dans la direction de la force de pesanteur et sont transportées horizontalement au moyen d'au moins un dispositif d'évacuation.
